Europäisches Patentamt

European Patent Office

Office européen des brevets

(11) Veröffentlichungsnummer: **0 268 921 B1**

(12) **EUROPÄISCHE PATENTSCHRIFT**

(45) Veröffentlichungstag der Patentschrift: **22.01.92**

(21) Anmeldenummer: **87116552.8**

(22) Anmeldetag: **10.11.87**

(51) Int. Cl.⁵: **B05B 9/08**

(54) **Behälter für Druckspritzen.**

(30) Priorität: **21.11.86 DE 8631225 U**

(43) Veröffentlichungstag der Anmeldung:
**01.06.88 Patentblatt 88/22**

(45) Bekanntmachung des Hinweises auf die
Patenterteilung:
**22.01.92 Patentblatt 92/04**

(84) Benannte Vertragsstaaten:
**CH DE ES FR GB IT LI**

(56) Entgegenhaltungen:
BE-A- 725 774       CH-A- 382 076
DE-A- 1 813 305     DE-B- 1 179 042
DE-C- 542 727       FR-A- 652 565
GB-A- 793 561       GB-A- 912 456

(73) Patentinhaber: **MESTO Spritzenfabrik Ernst Stockburger GmbH**
**Ludwigsburgerstrasse 71**
**W-7149 Freiberg(DE)**

(72) Erfinder: **Essig, Günther**
**Einsteinstrasse 12**
**W-7149 Freiberg/N.(DE)**
Erfinder: **Mayer, Rolf**
**Erdmannhäuser Strasse 13**
**W-7142 Marbach/N(DE)**
Erfinder: **Stockburger, Erich**
**Kleines Wegle 1**
**W-7149 Freiberg/N(DE)**

(74) Vertreter: **Schmid, Berthold, Dipl.-Ing. et al**
**Kohler Schmid + Partner Patentanwälte**
**Ruppmannstrasse 27**
**W-7000 Stuttgart 80(DE)**

## Beschreibung

Die Erfindung betrifft einen Behälter für Druckspritzen mit einem glatten Mittelteil, an welches ein Bodenteil und ein Deckel angeschweißt ist, wobei der Deckel eine zum Mittelteil gerichtete, außen offene Führungshülse für ein Manometer, insbesondere mit Sicherheitsventil aufweist. Ein solcher Behälter ist aus der DE-A-1 813 305 bekannt.

Bei den bekannten Behältern für Druckspritzen bestand immer die Schwierigkeit, ein Manometer, insbesondere mit Sicherheitsventil so anzuordnen und zu befestigen, daß es einerseits leicht auswechselbar und andererseits nicht ungewollt losbar ist.

Demnach ist es die Aufgabe, einen gattungsgemäßen Behälter so zu gestalten, daß daran ein einfach auswechselbares und gegen ungewolltes Lösen gesichertes Manometer ohne Schwierigkeit befestigbar ist.

Gemäß der Erfindung weist der Deckel oberhalb der Führungshülse eine Nutführung für einen Klemmschieber bildende Lappen auf. Das in die Führungshülse eingesetzte Manometer kann nunmehr durch einfaches Einschieben des Klemmschiebers gesichert werden. Ebenso leicht läßt sich auch das Auswechseln des Manometers vornehmen. Zweckmäßigerweise ist der Klemmschieber gabelförmig ausgebildet und umfaßt den stiftförmigen Manometerkörper, wobei er einen Ringflansch desselben untergreift. Um ein ungewolltes Lösen des Klemmschiebers zu verhindern, ist dieser elastisch ausgebildet und weist an den gabelförmigen Enden nach außen gerichtete, die Nutenden hintergreifende Widerhaken auf. Zur Vermeidung von Beschädigungen des Manometers weist der Deckel eine Vertiefung auf, deren Wandteile das Manometer von drei Seiten nischenförmig umfassen. Sämtliche Teile können dabei in einfacher Weise im Spritzgießverfahren hergestellt werden.

Die Zeichnung zeigt ein Ausführungsbeispiel der Erfindung. Es stellen dar:

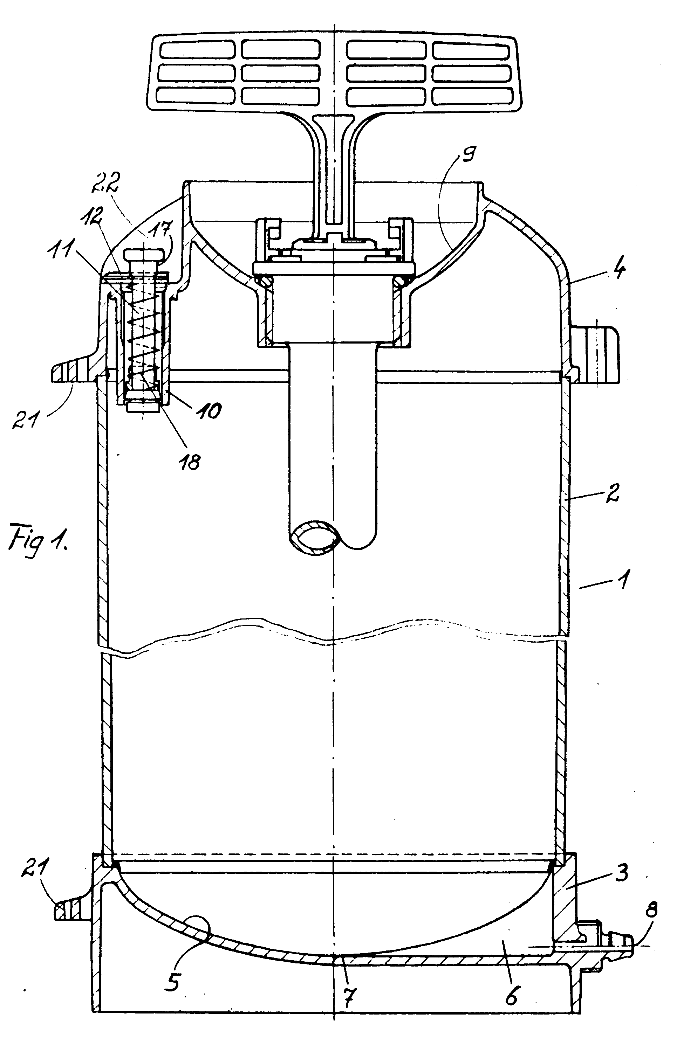

Fig. 1     einen Querschnitt durch den erfindungsgemäßen Behälter,

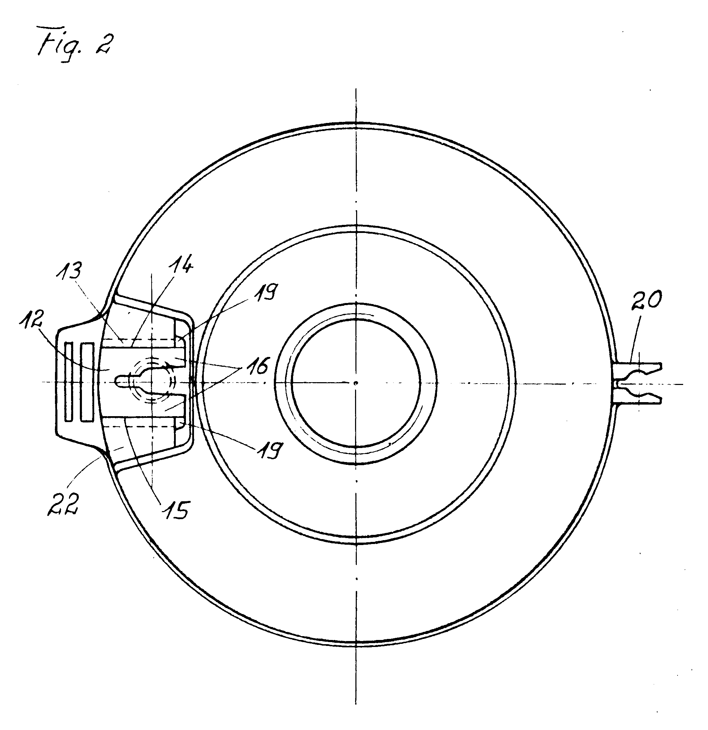

Fig. 2     eine Draufsicht nach Fig. 1 ohne Pumpenhebel.

Der Behälter 1 besteht aus dem glatten Mittelteil 2, dem Bodenteil 3 und dem Deckel 4. Sämtliche Teile sind im Spritzverfahren hergestellt und miteinander verschweißt. Das Bodenteil 3 weist eine kalottenförmige Innenfläche 5 auf, welche mit einem Kanal 6 versehen ist. Dieser beginnt etwa in der Mitte bei 7 und verläuft leicht geneigt nach außen zu einer Entleerungsöffnung 8. Durch diesen Kanal ist es möglich, den Behälter 1 fast völlig zu entleeren.

Der Deckel 4 ist aus einem Stück mit einem Einfülltrichter 9 gefertigt. Außerdem ist der Deckel 4 mit einer nach innen gerichteten Hülse 10 versehen, in welche ein stiftförmiges Manometer 11 mit Sicherheitsventil eingesetzt ist. Dieses wird am Deckel 4 durch einen Klemmschieber 12 gehalten, welcher in eine Nutführung 13 eingesetzt ist. Diese wird durch zwei Lappen 14 und 15 gebildet. Der Klemmschieber 12 ist gabelförmig ausgebildet und umfaßt mit seinen Gabeln 16 das stiftförmige Manometer 11, wobei er einen Ringflansch 17 untergreift. Dabei stützt sich die Druckfeder 18 des Manometers 11 am Klemmschieber 12 ab. Um ein unfreiwilliges Herausrutschen des Klemmschiebers 12 aus der Nutführung 13 zu verhindern, ist er elastisch gestaltet und weist an den freien Enden der Gabeln 16 nach außen gerichtete Widerhaken 19 auf, welche die Nutenden hintergreifen. Der Deckel 4 ist außerdem mit einer federnden Klemmvorrichtung 20 für das nicht dargestellte Spritzrohr versehen. Am Ansatz der Führungshülse (10) weist der Deckel (4) eine Vertiefung (22) auf, deren Wandteile das Manometer (11) von drei Seiten nischenförmig umfassen, um es gegen Beschädigungen zu schützen. Dadurch erübrigt sich die Anbringung einer sonst üblichen, als zusätzliches Teil erforderlichen Verkleidung.

Um einen Tragriemen anbringen zu können, sind am Deckel 4 und am Bodenteil 3 gürtelschließenartige Halterungen 21 vorgesehen, in welche der Tragriemen längenverstellbar befestigt werden kann.

## Patentansprüche

1.    Behälter für Druckspritzen mit einem glatten Mittelteil, an welches ein Bodenteil und ein Deckel angeschweißt ist, wobei der Deckel (4) eine zum Mittelteil (2) gerichtete, außen offene Führungshülse (10) für ein Manometer (11), insbesondere mit Sicherheitsventil, aufweist, dadurch gekennzeichnet, daß der Deckel (4) oberhalb der Hülse (10) eine Nutführung (13) für einen Klemmschieber (12) bildende Lappen (14, 15) aufweist.

2.    Behälter nach Anspruch 1, dadurch gekennzeichnet, daß der gabelförmig ausgebildete Klemmschieber (12) den stiftförmigen Manometerkörper (11) umfaßt und einen Ringflansch (17) desselben untergreift.

3.    Behälter nach einem oder beiden der vorhergehenden Ansprüche 1 und 2, dadurch gekennzeichnet, daß der Klemmschieber (12) elastisch ausgebildet ist und an den gabelförmigen Enden (16) nach außen gerichtete, die Nutenden hintergreifende Widerhaken (19) aufweist.

**4.** Behälter nach einem oder mehreren dar vorhergehenden Ansprüche 1 bis 3, dadurch gekennzeichnet, daß der Deckel (4) am Ansatz der Führungshülse (10) eine Vertiefung (22) aufweist, deren Wandteile das Manometer (11) von drei Seiten umfassen.

## Claims

**1.** Container for pressure spraying with a smooth central section to which a base part and a lid are welded, wherein the lid (4) comprises an outwardly open guide sleeve (10) for a manometer (11), in particular with a safety valve, the sleeve being directed towards the central section (2), characterised in that above the sleeve (1) the lid (4) comprises a groove guide (13) for tongues (14,15) forming a clamping slide (12).

**2.** Container according to Claim 1, characterised in that the fork-shaped clamping slide (12) surrounds the pin-like manometer body (11) and engages below an annular flange (17) thereof.

**3.** Container according to one or both of the preceding Claims 1 and 2, characterised in that the clamping slide (12) is resilient and comprises at the fork-shaped ends (16) outwardly directed barbs (19) engaging behind the groove ends.

**4.** Container according to one or more of the preceding Claims 1 to 3, characterised in that on the attachment of the guide sleeve (10) the lid (4) comprises a recess (22) of which the wall sections surround the manometer (11) on three sides.

## Revendications

**1.** Récipient pour arrosage sous pression, avec une partie centrale lisse, sur laquelle sont soudés une partie de fond et un couvercle, le couvercle (4) présentant un manchon de guidage (10) ouvert vers l'extérieur, orienté vers la partie médiane (2), pour un manomètre (11), en particulier avec une soupape de sécurité, caractérisé en ce que le couvercle (4) présente, au-dessus du manchon (10) un guidage à rainure (13) pour des languettes (14,15) formant un curseur de serrage (12).

**2.** Récipient selon la revendication 1, caractérisé en ce que le curseur de serrage fourchu (12) entoure le corps de manomètre (11) en forme de tige et vient en contact par le dessous avec une bride annulaire (12) de ce dernier.

**3.** Récipient selon l'une ou les deux revendications précédentes 1 et 2, caractérisé en ce que le curseur de serrage (12) est élastique et présente sur les extrémités fourchues (16) des crochets de retenue (19) saisissant l'arrière des extrémités de rainure, et dirigés vers l'extérieur.

**4.** Récipient selon une ou plusieurs des revendications précédentes 1 à 3, caractérisé en ce que le couvercle (4) présente sur l'appendice du manchon de guidage (10) un renfoncement (22) dont les parties de paroi entourent de trois côtes le manomètre (11).

Fig 1.

Fig. 2